# EUROPEAN PATENT SPECIFICATION

(11) **EP 0 704 677 B1**
(45) Date of publication and mention of the grant of the patent: **15.04.1998**
(21) Application number: 94202847.3
(22) Date of filing: 02.10.1994
(51) Int. Cl.: G01C 23/00

(54) **TCAS III guidance control display**
Leitsteuerungsanzeige für TCAS III
Dispositif d'affichage de contrôle de guidage pour TCAS III

(43) Date of publication of application: 03.04.1996
(73) Proprietor: Fokker Technology B.V., 1438 AN Oude Meer (NL)
(72) Inventor: Bruins, Johan Karl, NL-1185 SR Amstelveen (NL)
(74) Representative: de Bruijn, Leendert C.

(56) References cited:
- EP-A- 0 396 071
- WO-A-89/04003
- US-A- 5 185 606
- US-A- 5 248 968

## Description

### TECHNICAL AREA

This invention relates to avionics systems and, more particularly, air traffic alert and collision avoidance systems (TCAS).

### BACKGROUND OF THE INVENTION

From 1955 the development of airborne collision avoidance systems has been subject of studies and research. An air Traffic alert and Collision Avoidance System (TCAS) is a system that continuously estimates and updates the flight paths of other aircraft. The hardware required to implement TCAS equipment onboard of an aircraft consists of a mode-S transponder, a TCAS computer, related antennas, a control panel and display devices. The TCAS equipment transmits interrogation signals to transponder equipped aircraft within its immediate vicinity and receives reply signals from said aircraft. By measuring the time intervals between the interrogation and the reply the TCAS computer can determine a potential threat and will if necessary generate Resolution Advisory information.

TCAS II systems provide collision avoidance Resolution Advisories, only in the vertical plane, by means of vertical speed commands. One example of TCAS II vertical speed Resolution Advisory display possibilities is described in WO89/04003 of Allied-Signal Inc, titled "Traffic Advisory Vertical Speed and Radar Display", where the TCAS II resolution advisory is displayed on the Instantaneous Vertical Speed Indicator (IVSI) round dial display. Vertical Speed Indicators on the Primary Flight Display (PFD) may also be used, as is described in Aviation Week & Space Technology, February 23, 1987, pages 43 to 46, Paper 89-3361 of the AIAA Atmospheric Flight Mechanics Conference of August 14-16, 1989 in Boston, and Boeing Airliner April/June 1987, pages 8-12. And in US 5,248,968 assigned to Boeing and US 5,185,606 assigned to Fokker Aircraft BV Resolution Advisory pitch cues are displayed on the PFD by processing the TCAS II vertical speed output.

The third generation TCAS computer, TCAS III, provides collision avoidance Resolution Advisory's (RA commands) in the vertical and horizontal planes. The TCASIII RA commands are fly-from commands. They indicate a portion of airspace to get out when a corrective RA is issued or to stay out when a preventive RA is issued. TCASIII has the ability to predict horizontal separation and to recommend horizontal escape manoeuvres in situations where vertical escape manoeuvres may not be fully reliable. Another way of describing TCAS RA commands is that a RA command is either positive (DO's) or negative (DON'Ts). For example CLIMB or DON'T CLIMB, TURN LEFT or DON'T TURN LEFT. Another example of a positive RA Command is MAINTAIN VERTICAL SPEED, indicating that e.g. if the aircraft was climbing it is commanded to continue doing so. In the vertical plane positive or negative RA vertical speed commands are given and in the horizontal plane positive or negative RA roll commands are given. TCASIII preferably chooses an escape manoeuvre in either vertical or horizontal plane. Combinations of RA commands, so-called double-dimension RA commands are also possible, e.g. turn right and lower vertical airspeed (descend). In addition to its ability to choose the more reliable resolution plane, TCASIII can reduce the number of instances in which the pilot will be asked to depart from his intended flight path because it can predict horizontal separation. So TCASIII can eliminate those alerts for which safe passage is predicted in the horizontal dimension, when the same situation would produce a TCASII alert. Also the added horizontal separation information of TCASIII, will allow more often to issue a preventive RA, an RA which tells the pilot to maintain present roll and vertical speed or not to climb or roll. In this case also TCASII would often have to give a corrective vertical speed RA, because it has no information concerning horizontal separation between the aircraft en the intruder aircraft. The enhanced threat detection from TCASIII includes a horizontal miss-distance filter, which uses bearing information to reduce the number of unnecessary alert, and it uses a so-called "variable threshold" concept to delay the issuance of an RA in cases where it is safe to do so.

This invention pertains to the integrated display of TCAS III RA commands on the Primary Flight Display (PFD). It is an object of this invention to provide TCAS III RA command symbology on a Primary Flight Display which can be flown intuitively without mistakes.

### SUMMARY OF THE INVENTION

In agreement with said object the invention provides an apparatus for presenting symbolic information on an electronic attitude display device of an aircraft in response to data generated by a Traffic alert and Collision Avoidance (TCAS) computer aboard said aircraft, said symbolic information being intended to instruct the flight deck crew of the aircraft how to avoid collision with other aircraft intruding the airspace quarded by the TCAS computer, said apparatus comprising:
- means for displaying a roll angle scale on said attitude display device,
- means for receiving data from the aircraft representing the roll angle of the airplane and for displaying a corresponding roll angle symbol along said roll angle scale;
- means for
   - receiving data from the TCAS computer related to air space areas occupied by other aircraft
   - displaying a corresponding keep-out symbol alomg a section of the roll angle scale informing the flight deck crew not to enter said section and
   - displaying a go-to symbol along said roll angle scale pointing to a section of the scale not marked by a keep out symbol in the situation whwerin the roll angle symbol coincides with the keep-out symbol instructing the flight deck crew to turn the aircraft such that the roll angle symbol will move out of the section marked by the keep out symbol.

### DRAWINGS

The invention will be explained in more detail with reference to the attached drawings in which:
figure 1 illustrates the screen of a conventional primary flight display:
Figure 2 illustrates the screen of figure one during a right turn
Figures 3A - 8 illustrate various screens used for explaining the the invention in the following part of the description.

### DESCRIPTION

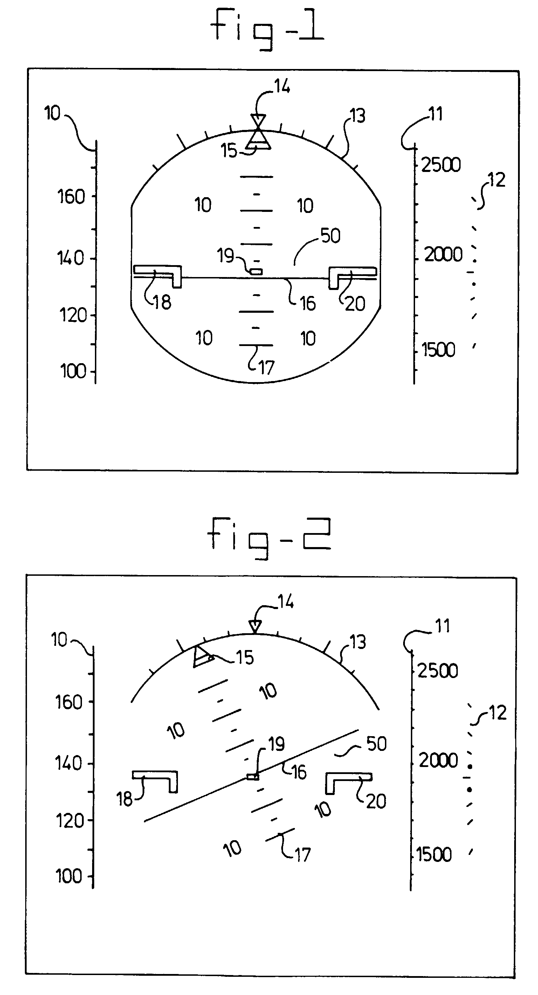

FIG 1 is illustrative of a conventional primary flight display which can be electronically presented on a screen of a cathode-ray tube or liquid crystal device. The display field shows a centre display area, a right hand side display area and left hand side display area. The left hand side display area shows an airspeed scale 10. At the right hand side an altitude scale 11 and a vertical speed scale 12 are displayed. The central display area looks like a gyroscopic artificial horizon indicator but is electronically displayed instead of mechanically functioning. It includes a fixed arcuate roll scale 13 having a fixed roll scale centre pointer (roll index) 14 and a moving roll attitude indicator (pointer) 15. The pointer 15 moves along the fixed roll scale 13 when the aircraft rotates along its longitudinal axis, when flying a turn, indicating the degree of turn in relation to the roll index 14. The artificial horizon 16 divides the display in two portions, and is perpendicularly crossed by the pitch scale ladder 17. The display also comprises an aircraft reference symbol 50, in this example emboddied as a three part aircraft reference symbol is shown with a boresight 19 and left and right wings 18 and 20.

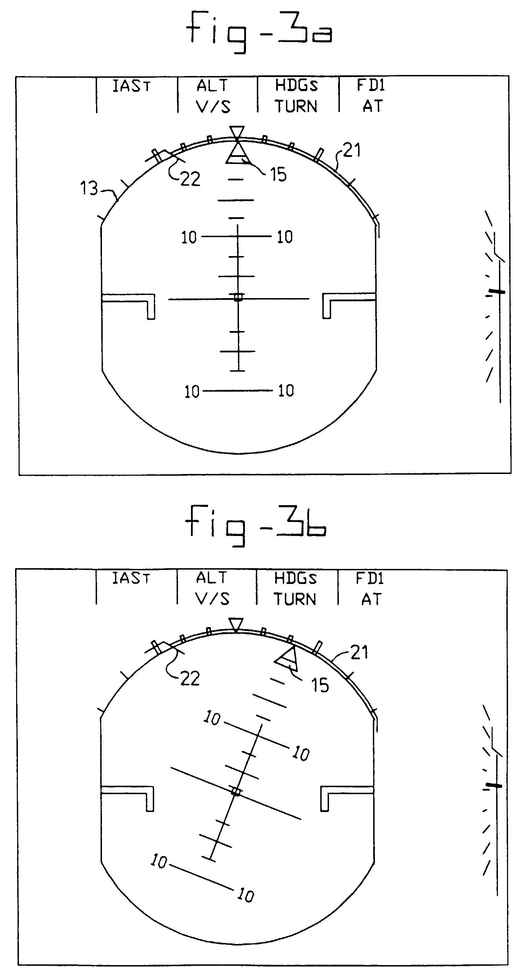

When flying a right turn, as shown in FIG 2, the PFD shows this by rotation of the pointer 15 to the left along the fixed roll scale 13, also the artificial horizon 16 "tilts" to the left, while the aircraft reference symbol 50 and the roll index 14 stay fixed. This is because the PFD is based on the roll, pitch and yaw axes of the aircraft as opposed to earth-based axes. This means that the aircraft reference symbol 50 is always in line with the pilots line of view. From the pilots point of view when he rolls the aircraft to fly a turn, the horizon tilts to the opposite side. As the artificial horizon 16 and the pitch ladder 17 are destined to stay perpendicular to each other, this results in a turn indicated not only by the turn of artificial horizon 16 and pitch ladder 17 but also by the distance between pointer 15 and roll index 14 on the fixed roll scale 13.

The TCAS computer scans the airspace around the aircraft and in case an intruder aircraft is detected, it determines if evasive action is necessary, and if so what kind of evasive action has to be taken. The TCASIII computer can issue vertical, horizontal or double-dimension Resolution Advisory commands. The vertical RA command is given by a vertical speed output, the horizontal RA command by a roll command output. When using the vertical speed indicator and the roll scale for displaying the TCASIII Resolution Advisory information, it was discovered that the conventional roll scale, roll index and pointer cause the pilot to intuitively direct the aircraft to the opposite direction as was indicated by the TCAS RA.

A TCASII display for the RA vertical speed command, conventionally shows a red line segment along the vertical speed scale indicating vertical airspeeds to be avoided and a green line segment indicating vertical airspeeds required to attain in order to avoid collision or collision risk. Following the conventional TCASII display of RA commands on the PFD, Fokker evaluated a display of TCASIII RA commands on the same PFD. In this evaluation TCASIII RA command information for roll and vertical airspeed were displayed using red "keep out" and green "fly-to" line segments along roll scale and vertical speed scale. FIG 3A, shows a first PFD of an aircraft in level flight with a TCASIII corrective RA roll command, which the aircraft has to follow in order to eliminate the by the TCASIII system detected threat of collision with an intruder aircraft in the airspace surrounding the aircraft. The corrective RA roll command is shown on the fixed roll scale 13 with a two part line segment consisting of a first part red line segment 21 delineating the keep-out portion of the roll-scale, and a second part green line segment 22 delineating the fly-to portion of the roll scale. The pilot has to fly pointer 15 out of the red area 21 into the green area 22. This is the RA roll command TURN RIGHT. FIG 3B shows the PFD after the pilot has reacted to this roll-cue RA. Testpilots reacted to the corrective RA roll command by intuitively moving the steering column away from red zone 21 and initiating a left turn instead of the commanded right turn, causing the aircraft to fly into red zone 21. Pointer 15 has moved deeper into on roll scale 13 delineated red keep out area 21.

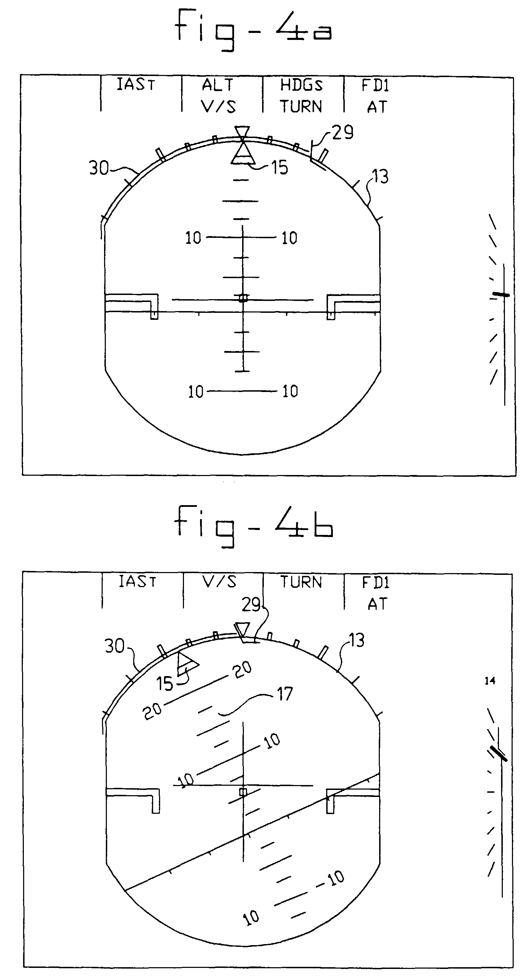

In order to avoid such reactions to the corrective RA roll command, a second PFD was devised on which the position of the RA roll command at the display was changed. Additionally to the change of position the RA roll command symbol was changed from a fixed RA roll command symbol into a sliding symbol. In contrast to FIG 3A which shows the positive RA roll command TURN RIGHT by delineating red keep out area 21 on the roll scale on the right hand side of green fly to area 22, in FIG 4A the same positive RA roll command symbol TURN RIGHT is shown by a similar two part line segment but line segment 30 delineating red keep out area 30 on the fixed roll scale is positioned on the left hand side of green fly to area 29. The pilot is encouraged to intuitively move the aircraft away from the red area by moving the steering column physically away from the red area, thereby initiating the commanded TURN RIGHT. At the same time by making the RA roll command symbol into a sliding symbol, when initiating and maintaining the commanded RIGHT TURN line segments 29 and 30 slide along roll scale 13 in opposite direction of the initiated roll. Now the pilot has in effect fly the green fly-to area 29 to the centre of the roll scale and get pointer 14 inside the green area 29 and out of keep out area 30. Test showed that although the display was intellectually understood when explained it was dynamically incorrectly flown. Testpilots initially reacted intuitively correct by moving the steering column away from the red zone, and initiating the right turn. But then got confused because as shown in Fig 4B pointer 15 is still in red keep out area 30. This was perceived by the pilots as an unwanted situation triggering them to "correct" the situation by attempting to fly pointer 15 out of the red. Even after a training how to fly the display the testpilots in the simulator made the wrong roll when presented with a RA roll command according to FIG 4A.

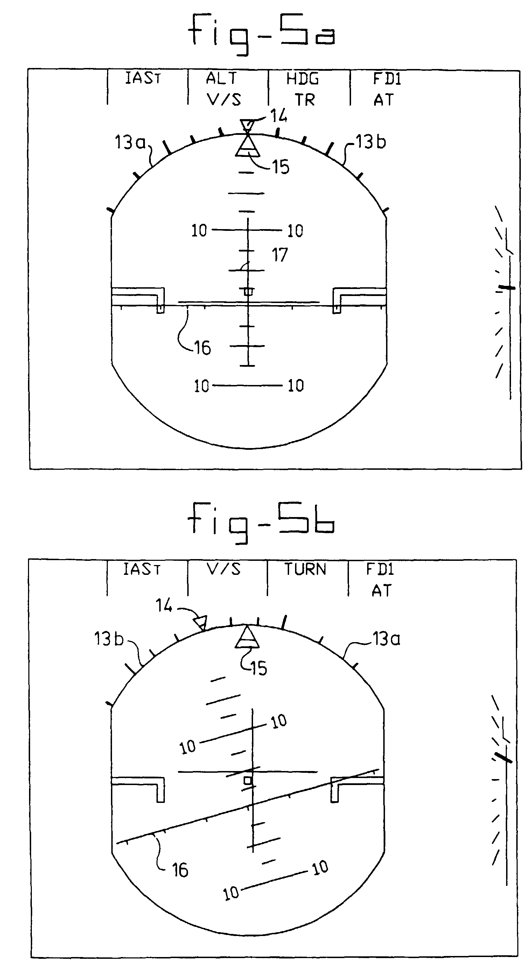

In order to solve this second problem according to this invention, a third PFD was devised on which pointer 15 conventionally is locked to the pitch scale perpendicular to the artificial horizon, is now inversely locked into fixed position on the intersection between an imaginary vertical line segment originating in the bore sight of the aircraft reference symbol and positioned perpendicular to the horizontal axis of the aircraft reference symbol and the arcuate line symbol delineating boundary of the gyroscopic centre section of the PFD. Also conventionally fixed roll scale 13 is not longer fixed, but moves relative to pointer 15 when a turn is flown. Line segments delineating keep out area 30 and fly to area 29 are fixed on the sliding roll scale 13. Pointer 15 is fixed on the centre of roll scale 13, and is as a result of the moving roll scale always perpendicular to the artificial horizon 16 and centrally above pitch scale ladder 17. FIG 5A and 5B shows the PFD accordingly, when an aircraft changes its attitude from level flight as shown in FIG 5A into right roll as shown in FIG 5B when no TCASIII RA commands are given. FIG 5A shows the PFD of the aircraft in level flight, and FIG 5B demonstrates that roll scale 13 has moved to the left of pointer 15, as is shown by the position of roll index 14 and roll angle indicators 13a and 13b. Also the artificial horizon 16 and pitch scale ladder 17 assembly have tilted to the left.

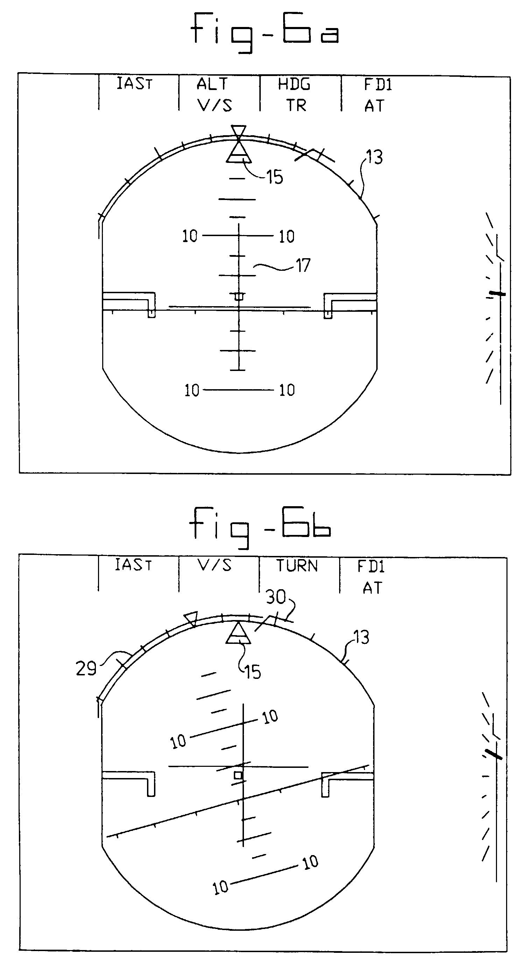

FIG 6A shows the RA roll command symbol as displayed on the PFD according to the preferred embodiment of this invention. The PFD of an aircraft in a level flight is shown, with corrective RA roll command . The roll-cue RA comprises the corrective red keep-out area 29 and the green fly to area 30 as indicated. The pilot has to fly out of red area 29 and will move the aircraft steering column towards green area 30. So the roll-cue RA of FIG.6A tells the pilot to TURN RIGHT in order to avoid collision. FIG 6B shows the PFD after the pilot has nearly executed the commanded right turn. Red keep out area 29 is moving with the roll scale towards the left as is the neighbouring green fly to area 30, indicating the aircraft is moving towards the fly-to zone in a right turn. Pointer 15 is now nearing the green fly-to area 30, indicating to the pilot that he is nearing the green fly-to area and that the threat of collision is almost over. After pointer 15 has entered green fly-to area 30, the pilot is no longer required to correct his flight path in order to avoid the threat of collision. This TCASIII RA was flown without any difficulty. The display appeared to be very intuitive.

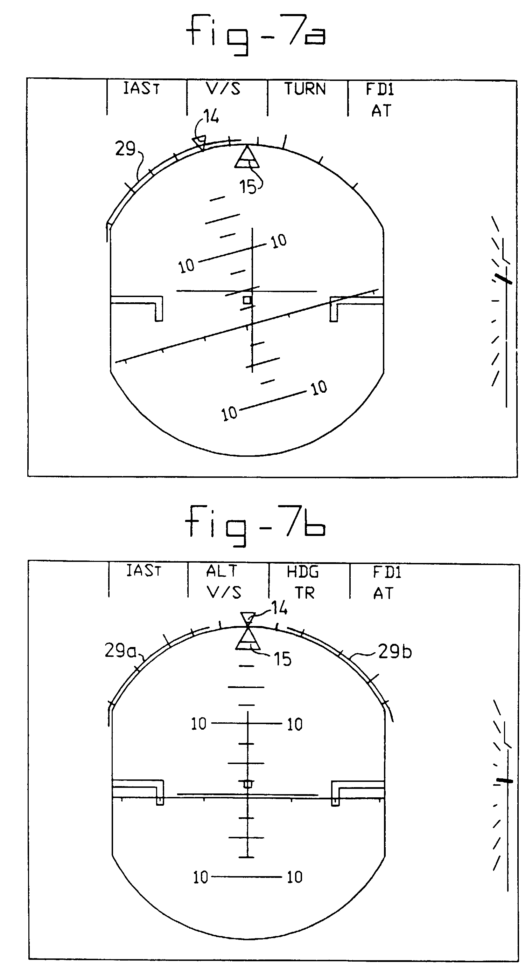

FIG 7A shows the RA roll command symbol as displayed on the PFD according to the preferred embodiment of this invention. The PFD of an aircraft in a right turn is shown with a preventive RA roll command . The RA roll command is preventive because only a red keep out 29 is shown. Pointer 15 is outside of the keep out area 29, which indicates that the aircraft is not within the keep out area. The pilot is warned but not urged to change his present flight path. So the RA roll command FIG.7A is preventive and tell the pilot DO NOT TURN RIGHT. FIG 7A shows the RA roll command symbol as displayed on the PFD according to the preferred embodiment of this invention. The PFD of an aircraft in level flight is shown with a preventive RA roll command. The RA roll command is preventive because two keep out area's 29A and 29B are delineated on the roll scale, but no fly to area is displayed. Pointer 15 is outside of the keep out areas 29A and 29B, it is in effect positioned between them. This indicates that the aircraft is not within the keep out areas. The pilot is warned but will not have to change his present flight path. So the RA roll command FIG.7B is preventive and tells the pilot DO NOT TURN RIGHT AND DO NOT TURN LEFT.

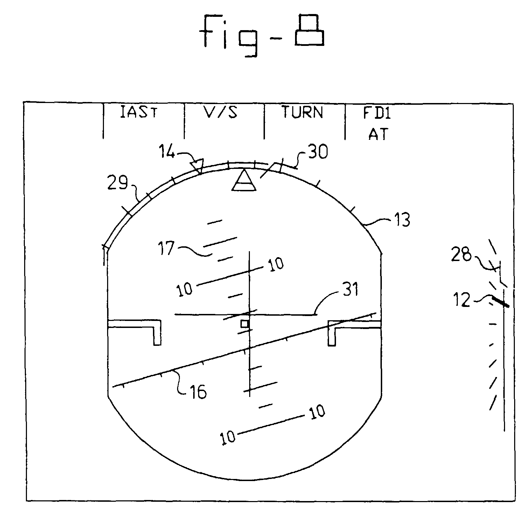

According to another embodiment of the invention, TCASIII RA is used integrated in the aircrafts Automatic Flight Control and Augmentation System (AFCAS). This enables the crew to fly TCASIII collision avoidance manoeuvres automatically by Autopilot (AP) or to fly it manually with guidance of the Flight Director. In FIG 8 the Flight Director 31 is used in combination with the TCASIII roll and vertical speed RA commands, as a guidance to fly the aircraft manually to the area with the greatest safety and with a minimum of aircraft manoeuvring. In FIG. 8 the PFD of an aircraft flying a right turn is displayed, with a corrective RA roll command and a corrective vertical speed RA. Also Flight Director 31 is displayed in the centre of the PFD. The cross-hairs of FD 31 indicate that the aircraft has to pitch up and level out of the right turn and turn right. The pilot will fly pointer 15 to the green fly-to area 30 and the vertical speed indicator 12 to the green fly-to area 28.

When supported by AFCAS and if the RA is corrective, then the appropriate collision avoidance flight mode is automatically armed. So when a corrective RA vertical speed command is issued by TCASIII, "V/S" is annunciated in the vertical path window of the Flight Mode Annunciator at the top of the PFD. When a corrective RA roll command is issued by TCASIII, "TURN" is annunciated in the lateral path window of the Flight Mode Annunciator at the top of the PFD. The collision avoidance flight mode is engaged by manual selection. This enables the crew to evaluate the threat situation in connection with the issued RA before any deviation from the original flight path is initiated. When armed the Flight Mode Annunciations are depicted in a different colour than when engaged. For the engagement of the collision avoidance flight mode a dedicated pushbutton is provided on the Flight Mode Panel (FMP). This switch only effects the flight mode in the RA planes and leaves the AutoPilot (AP) and AutoThrottle (AT) engage status unchanged. Fig. 8 also shows these Flight Mode Annunciations at the top of the display. Coloured FMA's "V/S" and "TURN" indicate that the collision avoidance flight modes for both vertical and lateral paths are engaged.

It is also possible to display a pitch guidance symbol for vertical speed RA in combination with the RA roll command symbol. Us of the FD in such a display is optional, but it might clutter the display.

It is also possible a conventional fixed roll scale 13 and movable pointer 15 and fly effective collision avoidance manoeuvres, when using the FD as additional pitch and roll symbol.

In this description the RA roll command symbol is depicted as a line segment which may be a single red line segment in case of a preventive RA roll command and a two part red/green line segment in case of a corrective RA roll command. It is within the scope of this invention to use other symbols to mark the keep out and fly to areas on roll scale 13, such as hatching, double-stroked line segments, other types of hatching symbols (stars, bullets) and different colours. Also the pointers used in the figures are triangular but may be of different shape and/or colour.

## Claims

1. An apparatus for presenting symbolic information on an electronic attitude display device of an aircraft in response to data generated by a Traffic alert and Collision Avoidance (TCAS) computer aboard said aircraft, said symbolic information being intended to instruct the flight deck crew of the aircraft how to avoid collision with other aircraft intruding the airspace quarded by the TCAS computer, said apparatus comprising:
- means for displaying a roll angle scale (13) on said attitude display device,
- means for receiving data from the aircraft representing the roll angle of the airplane and for displaying a corresponding roll angle symbol along said roll angle scale;
- means for
- receiving data from the TCAS computer related to air space areas occupied by other aircraft
- displaying a corresponding keep-out symbol (30) alomg a section of the roll angle scale (13) informing the flight deck crew not to enter said section and
- displaying a go-to symbol (29) along said roll angle scale (13) pointing to a section of the scale not marked by a keep out symbol in the situation whwerin the roll angle symbol coincides with the keep-out (30) symbol instructing the flight deck crew to turn the aircraft such that the roll angle symbol will move out of the section marked by the keep out symbol (30).

2. Apparatus according to claim 1 comprising furthermore means for displaying an aircraft reference symbol on the display device and means for relating said roll angle symbol to said aircraft symbol such that both symbols are displayed at fixed predetermined positions, whereby any roll angle change is indicated by a movement of the roll angle scale along said roll angle symbol.

3. Apparatus according to claim 1 or 2, wherein the roll angle scale is displayed as a line bearing scale marks at one side whereby the roll angle symbol is embodied as a pointer positioned at the other side of said line and pointing to said line.

4. Apparatus according to one of the preceeding claims, wherein said keep out symbol is eboddied as a line segment displayed parallel to said roll angle scale or overlapping said roll angle scale.

5. Apparatus according to claim 4, wherein the keep out symbol is displayed in a color which is for the flight deck crew intuitively related to danger, e.g. a red color.

6. Apparatus according to one of the preceeding claims, wherein the go-to symbol is emboddied as a line segment bounding the keep-out symbol.

7. Apparatus according to claim 6. wherein the go-to symbol is displayed in a color which is for the flight deck crew intuitively related to safety, e.g. a green color.

8. Apparatus for presenting to a pilot of an aircraft resolution advisory (RA) information developped by a traffic alert and collision avoidance system computer (TCAS) aboard said aircraft, said apparatus comprising
(a)
means for:
- receiving data representing the collision avoidance horizontal evasive action to eliminate the threat of a collision,
- receiving data from the aircraft representing the roll angle of the aircraft,
- determining the potential threat in order to reduce unnecessary alert,
- producing a resolution advisory (RA) for the roll angle,
and
(b)
- an electronic display means including an aircraft reference symbol (18,19,20) and a roll axis scale (13),
- a RA roll quidance symbol projected along said roll axis scale between an outer end thereof (51 or 52) and a roll angle value (54), defining a keep-out area (29),
- the pointer (15) pointing to said roll guidance symbol,
whereby, the pointer (15) pointing into the keep-out area (29) of the roll guidance symbol, the direction of the evasive roll action to be taken by the pilot equals the direction from the keep-out area (29) to the said roll angle value (54).

9. Apparatus according to claim 8, characterised in that the position of said pointer (15) along said scale is fixed to the position of said aircraft reference symbol and that during execution of said roll action the roll axis scale is moving in such a direction that the pointer (15) is moving outof the keep-out area.

10. Apparatus according to claim 9, characterised by that the keep-out area comprises a shaded area, a (cross)hatched area or an area with a colour differing from the background colour.

11. An apparatus as claimed in claim 9, characterised by that at least the part of the roll axis scale neighboured to the keep-out area along the roll axis scale comprises a shaded area, a (cross)hatched area or an area with a colour differing from the background colour.

12. Apparatus according to claim 10 or 11, characterised in that the keep-out area is coloured red and the part neighboured to the keep-out area is coloured green.

## Patentansprüche

1. Vorrichtung zur Darstellung symbolischer Informationen auf einer elektronischen Fluglagenanzeigeeinrichtung eines Flugzeugs als Reaktion auf Daten, die von einem Computer für Verkehrswarnung und Kollisionsvermeidung (TCAS) an Bord des besagten Flugzeugs erzeugt werden, wobei die besagten symbolischen Informationen die Cockpitcrew des Flugzeugs anleiten sollen, wie eine Kollision mit anderen Flugzeugen, die in den durch den TCAS-Computer überwachten Luftraum eindringen, vermieden werden kann, wobei die besagte Vorrichtung folgendes umfaßt:
- Mittel zum Anzeigen einer Rollwinkelskala (13) auf der besagten Fluglagenanzeigeeinrichtung,
- Mittel zum Empfangen von Daten aus dem Flugzeug, die den Rollwinkel des Flugzeugs darstellen, und zum Anzeigen eines entsprechenden Rollwinkelsymbols entlang der besagten Rollwinkelskala;
- Mittel zum
- Empfangen von Daten aus dem TCAS-Computer, die die Luftraumbereiche betreffen, die von anderen Flugzeugen eingenommen werden
- Anzeigen eines entsprechenden Abweissymbols (30) entlang eines Abschnitts der Rollwinkelskala (13), das der Cockpitcrew mitteilt, nicht in diesen Abschnitt einzutreten, und
- Anzeigen eines Go-To-Symbols (29) entlang der besagten Rollwinkelskala (13), das auf einen Abschnitt der Skala zeigt, der nicht durch ein Abweissymbol markiert ist, wenn das Rollwinkelsymbol mit dem Abweissymbol (30) zusammenfällt, wodurch die Cockpitcrew angeleitet wird, das Flugzeug so zu drehen, daß sich das Rollwinkelsymbol aus dem durch das Abweissymbol (30) markierten Abschnitt herausbewegt.

2. Vorrichtung nach Anspruch 1, die weiterhin Mittel zum Anzeigen eines Flugzeug-Bezugssymbols auf der Anzeigeeinrichtung und Mittel zum Herstellen eines Zusammenhangs zwischen dem besagten Rollwinkelsymbol und dem besagten Flugzeug-Bezugssymbol umfaßt, so daß beide Symbole an festen vorbestimmten Positionen angezeigt werden, wodurch jegliche Änderung des Rollwinkels durch eine Bewegung der Rollwinkelskala entlang dem besagten Rollwinkelsymbol angezeigt wird.

3. Vorrichtung nach Anspruch 1 oder 2, wobei die Rollwinkelskala als eine Linie angezeigt wird, die auf einer Seite Skalenmarkierungen trägt, wobei das Rollwinkelsymbol als Zeiger ausgeführt ist, der auf der anderen Seite der besagten Linie positioniert ist und auf die besagte Linie zeigt.

4. Vorrichtung nach einem der vorangehenden Ansprüche, wobei das besagte Abweissymbol als Liniensegment ausgeführt ist, das parallel zu der besagten Rollwinkelskala angezeigt wird oder die besagte Rollwinkelskala überlappt.

5. Vorrichtung nach Anspruch 4, wobei das Abweissymbol in einer Farbe angezeigt wird, die für die Cockpitcrew intuitiv mit Gefahr in Zusammenhang steht, z.B. in einer roten Farbe.

6. Vorrichtung nach einem der vorangehenden Ansprüche, wobei das Go-To-Symbol als Liniensegment ausgeführt ist, das das Abweissymbol begrenzt.

7. Vorrichtung nach Anspruch 6, wobei das Go-To-Symbol in einer Farbe angezeigt wird, die für die Cockpitcrew intuitiv mit Sicherheit in Zusammenhang steht, z.B. in einer grünen Farbe.

8. Vorrichtung, um einem Piloten eines Flugzeugs Entscheidungshilfeinformationen (RA-Informationen) darzustellen, die durch einen Computer eines Verkehrswarnungs- und Kollisionsvermeidungssystems (TCAS) an Bord des besagten Flugzeugs entwickelt werden, wobei die besagte Vorrichtung folgendes umfaßt:
(a) Mittel zum:
- Empfangen von Daten, die die horizontale Ausweichaktion der Kollisionsvermeidung darstellen, um die Gefahr einer Kollision zu beseitigen,
- Empfangen von Daten aus dem Flugzeug, die den Rollwinkel des Flugzeugs darstellen,
- Bestimmen der potentiellen Gefahr, um unnötige Warnungen zu verringern,
- Erzeugen einer Entscheidungshilfe (Resolution Advisory, RA) für den Rollwinkel, und
(b)
- ein elektronisches Anzeigemittel mit einem Flugzeug-Bezugssymbol (18, 19, 20) und einer Rollachsenskala (13),
- ein RA-Roll-Führungssymbol, das entlang der besagten Rollachsenskala zwischen einem äußeren Ende dieser Skala (51 oder 52) und einem Rollwinkelwert (54) vorsteht und einen Abweisbereich (29) definiert,
- den Zeiger (15), der auf das besagte Roll-Führungssymbol zeigt, wobei, während der Zeiger (15) in den Abweisbereich (29) des Roll-Führungssymbols zeigt, die Richtung der von dem Piloten auszuführenden Ausweich-Rollaktion gleich der Richtung von dem Abweisbereich (29) zu dem besagten Rollwinkelwert (54) ist.

9. Vorrichtung nach Anspruch 8, dadurch gekennzeichnet, daß die Position des besagten Zeigers (15) entlang der besagten Skala mit der Position des besagten Flugzeug-Bezugssymbols fest verbunden ist, und daß sich während der Ausführung der besagten Rollaktion die Rollachsenskala in einer solchen Richtung bewegt, daß sich der Zeiger (15) aus dem Abweisbereich heraus bewegt.

10. Vorrichtung nach Anspruch 9, dadurch gekennzeichnet, daß der Abweisbereich einen schattierten Bereich, einen (kreuz-)schraffierten Bereich oder einen Bereich mit einer von der Hintergrundfarbe verschiedenen Farbe umfaßt.

11. Vorrichtung nach Anspruch 9, dadurch gekennzeichnet, daß mindestens der dem Abweisbereich entlang der Rollachsenskala benachbarte Teil der Rollachsenskala einen schattierten Bereich, einen (kreuz-)schraffierten Bereich oder einen Bereich mit einer von der Hintergrundfarbe verschiedenen Farbe umfaßt.

12. Vorrichtung nach Anspruch 10 oder 11, dadurch gekennzeichnet, daß der Abweisbereich rot und der dem Abweisbereich benachbarte Teil grün ist.

## Revendications

1. Appareil pour présenter des informations symboliques sur un dispositif électronique d'affichage de l'orientation d'un aéroplane en réponse à des données générées par un ordinateur de "Radar Anticollision" (TCAS) à bord dudit aéroplane, lesdites informations symboliques étant destinées à fournir des instructions à l'équipage dans la cabine de pilotage de l'aéroplane quant à la manière d'éviter une collision avec un autre aéroplane empiétant dans l'espace aérien gardé par l'ordinateur TCAS, ledit appareil comprenant:
- un moyen pour afficher une échelle d'angle de roulis (13) sur ledit dispositif d'affichage de l'orientation,
- un moyen pour recevoir des données provenant de l'aéroplane représentant l'angle de roulis de l'aéroplane et pour afficher un symbole d'angle de roulis correspondant sur ladite échelle d'angle de roulis;
- des moyens pour
- recevoir des données provenant de l'ordinateur TCAS concernant les zones de l'espace aérien occupées par un autre aéroplane;
- afficher un symbole "accès interdit" correspondant (30) sur une section de l'échelle d'angle de roulis (13), qui informe l'équipage dans la cabine de pilotage de ne pas pénétrer dans ladite section; et
- afficher un symbole "se diriger vers" (29) sur ladite échelle d'angle de roulis (13), pointant vers une section de l'échelle non marquée par un symbole "accès interdit" dans la situation dans laquelle le symbole d'angle de roulis coïncide avec le symbole "accès interdit" (30), donnant pour instruction à l'équipage dans la cabine de pilotage de faire tourner l'aéroplane de telle sorte que le symbole d'angle de roulis quitte la section marquée par le symbole "accès interdit" (30).

2. Appareil selon la revendication 1, comprenant en outre un moyen pour afficher un symbole de référence d'aéroplane sur le dispositif d'affichage et un moyen pour faire correspondre ledit symbole d'angle de roulis audit symbole d'aéroplane de telle sorte que les deux symboles sont affichés à des positions fixes prédéterminées, n'importe quel changement d'angle de roulis étant indiqué par un mouvement de l'échelle d'angle de roulis le long dudit symbole d'angle de roulis.

3. Appareil selon la revendication 1 ou 2, dans lequel l'échelle d'angle de roulis est affichée sous forme d'une ligne portant des repères d'échelle d'un côté, le symbole d'angle de roulis étant réalisé sous forme d'un pointeur positionné de l'autre côté de ladite ligne et pointant vers ladite ligne.

4. Appareil selon l'une quelconque des revendications précédentes, dans lequel ledit symbole "accès interdit" est réalisé sous forme d'un segment de ligne affiché parallèlement à ladite échelle d'angle de roulis ou chevauchant ladite échelle d'angle de roulis.

5. Appareil selon la revendication 4, dans lequel le symbole "accès interdit" est affiché en une couleur qui, pour le poste de pilotage, fait penser intuitivement à un danger, par exemple une couleur rouge.

6. Appareil selon l'une quelconque des revendications précédentes, dans lequel le symbole "se diriger vers" est réalisé sous forme d'un segment de ligne délimitant le symbole "accès interdit".

7. Appareil selon la revendication 6, dans lequel le symbole "se diriger vers" est affiché en une couleur qui, pour le poste de pilotage, fait penser intuitivement à une situation sécurisante, par exemple une couleur verte.

8. Appareil pour présenter à un pilote d'un aéroplane des informations sous forme de conseils pour la prise de décision (RA) fournies par un ordinateur de "Radar Anticollision" (TCA) à bord dudit aéroplane, ledit appareil comprenant:
(a)
des moyens pour:
- recevoir des données représentant l'action d'évitement en direction horizontale, permettant d'éviter la collision pour éliminer la menace d'une collision,
- recevoir des données provenant de l'aéroplane représentant l'angle de roulis de l'aéroplane;
- déterminer la menace potentielle dans le but de réduire le nombre d'alertes inutiles,
- donner des conseils pour la prise de décision (RA) concernant l'angle de roulis, et
(b)
- un moyen d'affichage électronique englobant un symbole de référence d'aéroplane (18, 19, 20) et une échelle d'axe de roulis (13),
- un symbole de guidance du roulis de type RA projeté sur ladite échelle d'axe de roulis entre une extrémité externe (51 ou 52) de cette dernière et une valeur d'angle de roulis (54) définissant une zone d'accès interdit (29),
- le pointeur (15) pointe vers ledit symbole de guidance du roulis,
par lequel, lorsque le pointeur (15) pointe vers la zone à accès interdit (29) du symbole de guidance du roulis, la direction de la manoeuvre d'évitement par roulis qui doit être entreprise par le pilote est égale à la direction s'étendant entre la zone à accès interdit (29) et ladite valeur d'angle de roulis (54).

9. Appareil selon la revendication 8, caractérisé en ce que la position dudit pointeur (15) sur ladite échelle est fixe par rapport à la position dudit symbole de référence d'aéroplane et en ce que, lors de la mise en oeuvre de ladite manoeuvre de roulis, l'échelle d'axe de roulis se déplace dans une direction telle que le pointeur (15) quitte la zone à accès interdit.

10. Appareil selon la revendication 9, caractérisé par le fait que la zone à accès interdit comprend une zone ombrée, une zone hachurée ou une zone dont la couleur diffère de celle de l'arrière-plan.

11. Appareil selon la revendication 9, caractérisé par le fait qu'au moins la partie de l'échelle d'axe de roulis voisine de la zone à accès interdit sur l'échelle d'axe de roulis comprend une zone ombrée, une zone hachurée ou une zone dont la couleur diffère de celle de l'arrière-plan.

12. Appareil selon la revendication 10 ou 11, caractérisé en ce que la zone à accès interdit est colorée en rouge et la partie voisine de la zone à accès interdit est colorée en vert.
